Europäisches Patentamt

European Patent Office

Office européen des brevets

(11) Numéro de publication : **0 034 094**
**B1**

# FASCICULE DE BREVET EUROPÉEN

(45) Date de publication du fascicule du brevet :
**22.06.83**

(51) Int. Cl.³ : **G 21 C   7/12**

(21) Numéro de dépôt : **81400175.6**

(22) Date de dépôt : **04.02.81**

(54) **Ensemble de commande d'un réacteur nucléaire.**

(30) Priorité : **08.02.80 FR 8002861**

(43) Date de publication de la demande :
**19.08.81 Bulletin 81/33**

(45) Mention de la délivrance du brevet :
**22.06.83 Bulletin 83/25**

(84) Etats contractants désignés :
**BE CH DE GB IT LI SE**

(56) Documents cités :
**DE A 2 822 918**
**FR A 2 168 564**
**GB A 967 404**

(73) Titulaire : **Framatome**
**Tour Fiat 1 place de la Coupole**
**F-92400 Courbevoie (FR)**

(72) Inventeur : **Desfontaines, Guy**
**18 rue Jean Jaurès**
**F-92800 Puteaux (FR)**
Inventeur : **Le Helloco, Michel**
**26 avenue Raymond Poincaré**
**F-75116 Paris (FR)**

(74) Mandataire : **Bouget, Lucien et al**
**CREUSOT-LOIRE 15 rue Pasquier**
**F-75383 Paris Cedex 08 (FR)**

Jouve, 18, rue St-Denis, 75001 Paris, France

Ensemble de commande d'un réacteur nucléaire

L'invention concerne un ensemble de commande d'un réacteur nucléaire utilisé pour la production d'électricité ou la propulsion navale comportant une pluralité d'enceintes étanches en communication avec l'intérieur de la cuve du réacteur renfermant chacune un mécanisme de déplacement d'une grappe de matériau absorbant les neutrons dans le cœur du réacteur.

Pour la commande des réacteurs nucléaires, en particulier pour la commande des réacteurs nucléaires à eau pressurisée, on utilise des grappes de matériau absorbant fortement les neutrons qu'on déplace verticalement dans le cœur du réacteur entre les éléments combustibles, de façon à régler la puissance fournie par le réacteur en fonction du programme de puissance demandé.

D'autre part, ces grappes de matériau absorbant servent également à obtenir l'arrêt d'urgence du réacteur, lorsqu'on les fait chuter toutes ensembles en position d'insertion maximum dans le cœur du réacteur.

Pour obtenir le déplacement ou la retombée de ces grappes de matériau absorbant prolongées vers le haut par une tige de commande de grande longueur, on utilise des mécanismes de déplacement coopérant avec la tige de commande et disposés à l'intérieur d'enceintes étanches en communication avec l'intérieur de la cuve du réacteur où se trouve le cœur.

Ces enceintes étanches doivent permettre un déplacement de la tige de commande correspondant à un déplacement de l'ensemble absorbant entre ses positions d'insertions maximale et minimale. L'amplitude de ces déplacements correspond sensiblement à la hauteur des assemblages combustibles, c'est-à-dire dans le cas des réacteurs nucléaires à eau sous pression construits actuellement, environ 4,20 m.

Les mécanismes de déplacement, par exemple des cliquets, sont entraînés par un dispositif moteur qui est disposé généralement à la partie inférieure des enceintes étanches qui prolongent la cuve du réacteur vers le haut à partir du couvercle de cette cuve. En conséquence, la hauteur des enceintes étanches au-dessus du mécanisme à cliquets, coopérant avec la tige de commande, comportant des encoches également réparties sur la longueur de la tige, doit être au moins égale à la hauteur des assemblages combustibles.

Les enceintes étanches de très grande hauteur doivent être maintenues à leur partie supérieure à l'aide d'un dispositif anti-sismique constitué par une plaque elle-même maintenue en position grâce à des tirants disposés sur les parois de la piscine du réacteur. Il est extrêmement important en effet, de limiter les contraintes et les déformations dans les mécanismes en cas de séismes pour permettre l'arrêt d'urgence du réacteur par retombée des grappes de matériau absorbant dans le cas où le réacteur subit des secousses sismiques.

Cette plaque maintenant la partie supérieure des enceintes étanches joue également le rôle de plaque anti-missile car elle est étudiée pour arrêter les enceintes étanches au cas où ces dernières seraient éjectées de façon à empêcher toute détérioration des équipements adjacents.

Il est d'autre part nécessaire de créer au niveau des dispositifs moteurs des mécanismes une ventilation permettant d'éviter une élévation trop importante de la température sous l'effet du fluide primaire remplissant la cuve du réacteur et les enceintes étanches et de refroidir les dispositifs moteur pour leur permettre de fonctionner dans de bonnes conditions.

Enfin, il est également nécessaire d'isoler thermiquement le couvercle de la cuve du milieu extérieur, afin d'éviter toute déperdition qui abaisse le rendement de la chaudière et oblige en outre à renforcer le dispositif de conditionnement du bâtiment qui enferme le réacteur. Les ensembles de commande tels que décrits ci-dessus présentent des inconvénients dus au fait que leur hauteur importante au-dessus du couvercle de la cuve augmente sensiblement la hauteur de celle-ci et son encombrement et que la présence des dispositifs anti-sismiques fixés sur les parois de la piscine du réacteur complique les opérations d'ouverture et de fermeture du couvercle de la cuve.

La présence de la plaque anti-sismique au-dessus des moteurs et en partie haute des enceintes étanches est en outre gênante lorsqu'il s'avère nécessaire de changer un moteur défaillant ou une pièce du mécanisme situé dans l'enceinte étanche, opération qu'il est nécessaire de réaliser en présence de rayonnements ionisants.

D'autre part, il faut utiliser un dispositif d'extraction de chaleur complexe et encombrant au niveau des dispositifs moteur à la partie basse des enceintes.

Un autre inconvénient est que seul le couvercle de la cuve est calorifugé et qu'il se produit donc une déperdition calorifique importante au niveau des enceintes étanches.

Le but de l'invention est donc de proposer un ensemble de commande d'un réacteur nucléaire comportant une pluralité d'enceintes étanches, en communication avec l'intérieur de la cuve du réacteur, prolongeant cette cuve au-dessus de son couvercle, dans la direction verticale et renfermant chacune un mécanisme de déplacement d'une grappe de matériau absorbant les neutrons dans le cœur du réacteur, entraîné par un dispositif moteur, cet ensemble de commande étant d'une hauteur réduite au-dessus du couvercle de la cuve et permettant une protection efficace des enceintes étanches et des mécanismes en cas de secousses sismiques, un démontage et un remontage du couvercle de la cuve facilités, une bonne ventilation des dispositifs moteur des mécanismes sans utilisation de dispositif de ventilation complexe, une isolation thermique efficace de l'ensemble des enceintes étanches, ainsi qu'un accès facilité aux moteurs et au mécanisme placé dans l'enceinte étanche pour procéder aux opérations de maintenance et de dépannage éventuels.

Dans ce but, les dispositifs moteurs sont placés à la partie supérieure des enceintes étanches, à l'intérieur de cheminées d'aération verticales et l'ensemble de commande comporte un dispositif de support et d'isolation des enceintes étanches constitué par une structure résistante verticale solidaire du couvercle de la cuve, occupant toute la hauteur des enceintes étanches jusqu'à un niveau inférieur au niveau du dispositif moteur, une plaque horizontale fixée à la partie supérieure de la structure verticale présentant des ouvertures pour le passage des enceintes étanches ainsi qu'une enveloppe et une plaque horizontale isolant thermiquement les enceintes étanches du milieu extérieur jusqu'à un niveau inférieur au niveau du dispositif moteur.

Afin de bien faire comprendre l'invention, on va maintenant décrire en se référant aux figures jointes en annexe, un mode de réalisation d'un ensemble de commande suivant l'invention, par comparaison avec un ensemble de commande selon la technique antérieure.

La figure 1 représente dans une vue en coupe par un plan vertical un ensemble de commande selon l'art antérieur.

La figure 2 représente dans une demi-vue en coupe par un plan vertical un ensemble de commande suivant l'invention.

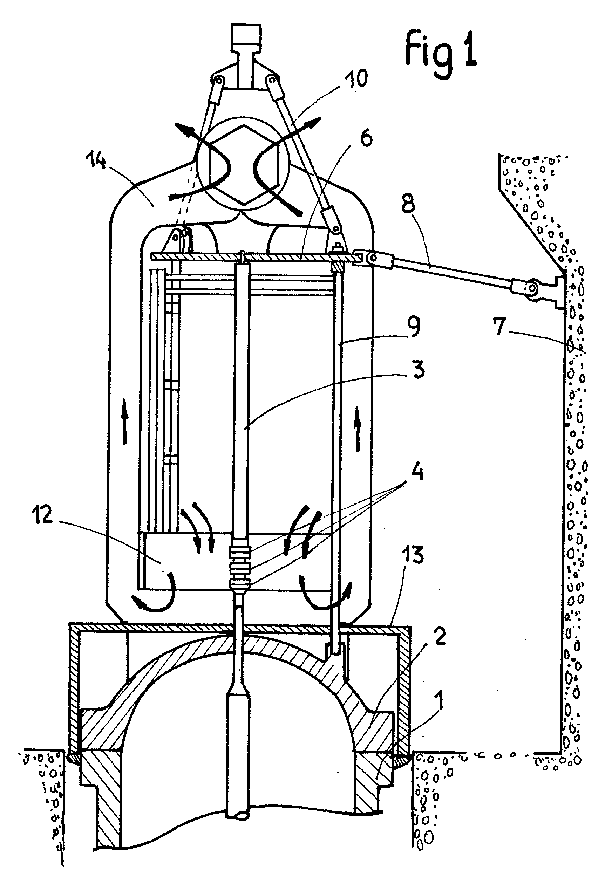

Sur la figure 1 on voit la cuve 1 d'un réacteur nucléaire à eau sous pression fermée à sa partie supérieure par un couvercle hémisphérique 2, traversé par une enceinte étanche 3 à l'intérieur de laquelle est disposé un mécanisme à cliquets 4 permettant le déplacement d'une tige de commande de grande longueur, à la partie inférieure de laquelle est fixé un ensemble absorbant que le dispositif 4 permet de déplacer à l'intérieur du réacteur.

Une seule enceinte 3 a été représentée mais il faut comprendre que l'ensemble de commande du réacteur comporte un grand nombre de dispositifs permettant chacun le déplacement d'un ensemble absorbant.

Les enceintes étanches 3 sont reliées à leur partie supérieure à une plaque anti-sismique de grande résistance 6 elle-même maintenue par rapport à la paroi 7 de la piscine du réacteur par un ensemble de tirants anti-sismiques 8.

Un ensemble de tirants de levage 9 permet le levage du couvercle de la cuve par un ensemble de levage 10 qui peut être relié au pont roulant desservant le réacteur.

Une jupe de ventilation 12 et des dispositifs de ventilation non représentés permettent de faire circuler de l'air de refroidissement au niveau du mécanisme et des dispositifs moteurs 4.

Une enveloppe calorifuge 13 permet d'isoler thermiquement du milieu extérieur, le couvercle 2 de la cuve.

On voit que si l'on veut soulever le couvercle de la cuve, il est nécessaire de démonter les tirants anti-sismiques 8 reliant la plaque 6 aux parois de la piscine ainsi que les gaines de ventilation reliant les dispositifs de ventilation aux gaines 14 et d'effectuer le levage d'un ensemble complexe et extrêmement lourd avec le dispositif de levage 10.

D'autre part, il est nécessaire de disposer d'un système de ventilation forcée au niveau des moteurs 4 alors que la déperdition calorifique au niveau de l'enceinte étanche sur toute la partie de cette enceinte étanche se trouvant au-dessus de l'enveloppe calorifuge 13 est extrêmement importante.

D'autre part, la hauteur de l'enceinte étanche 3 au-dessus des mécanismes 4 doit être au minimum égale à la hauteur des assemblages combustibles, ce qui augmente d'autant l'encombrement de la cuve du réacteur ou de son couvercle.

Il faut enfin noter que toute intervention ou changement de pièce sur le moteur ou le mécanisme situé dans l'enceinte étanche nécessite le démontage et dépose préalable de la plaque anti-sismique.

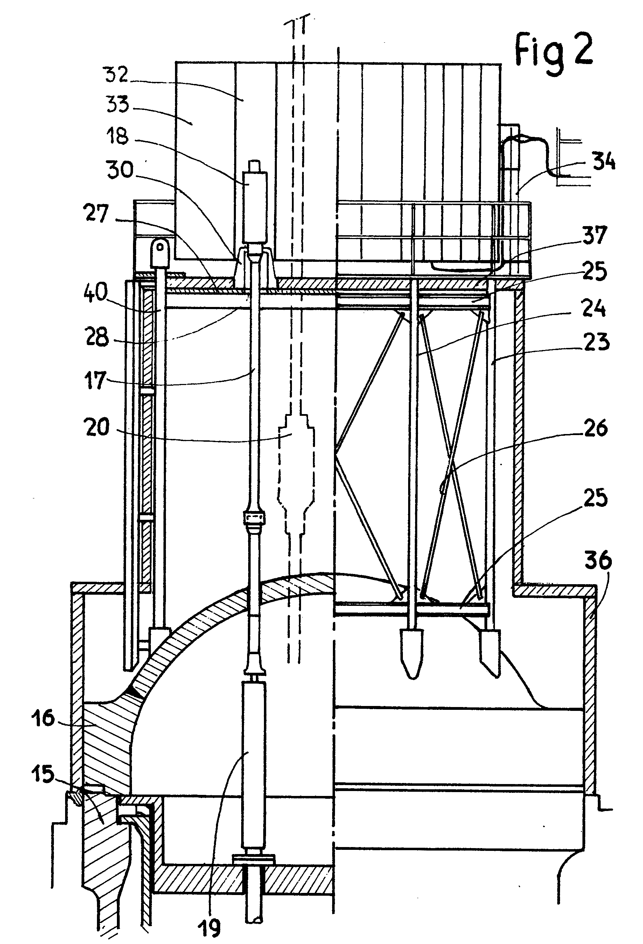

En se reportant à la figure 2, on voit un ensemble de commande suivant l'invention dont on n'a représenté également qu'une seule enceinte étanche.

Le couvercle 16 de la cuve 15 est traversé par cette enceinte étanche 17 prolongeant la cuve vers le haut sur une certaine hauteur.

Le mécanisme d'entraînement de la grappe de commande dans son déplacement vertical à l'intérieur du cœur est constitué par un dispositif à vis et écrou au moins partiellement disposé en dessous du couvercle 16 de la cuve, ce qui permet de diminuer la hauteur de l'enceinte étanche au-dessus du couvercle de cette cuve.

Le mouvement de rotation de l'écrou entraînant la vis dans un mouvement de translation est transmis à cet écrou disposé sous le couvercle de la cuve à partir du moteur 18 placé à la partie supérieure de l'enceinte étanche 17.

La vis entraînée en translation est reliée à une tige intermédiaire permettant la fixation de la grappe absorbante au mécanisme.

Un support de grappe 19 permet le guidage de la grappe lorsque celle-ci est extraite du cœur du réacteur sur une assez grande longueur.

Par comparaison, on a figuré en traits interrompus une enceinte étanche 20 associée à un dispositif moteur placé en partie basse de cette enceinte étanche, telle que celle utilisée dans les dispositifs de l'art antérieur.

On voit que cette enceinte 20 occupe une hauteur bien supérieure au-dessus du couvercle de la cuve à la hauteur occupée par l'enceinte 17. Une structure résistante verticale 23 est fixée sur le couvercle 16 de la cuve et se prolonge vers le haut jusqu'à un niveau un peu inférieur au niveau des enceintes étanches telles que 17 où se trouvent les dispositifs moteurs 18. Cette structure 23 comporte des éléments verticaux 24 de grande résistance et des éléments horizontaux 25 constituant un contour polygonal à la partie inférieure et à la partie supérieure de la structure 23 de forme prismatique.

Des éléments raidisseurs 26 permettent d'assurer la rigidité de l'ensemble de la structure 23.

Une plaque horizontale 27 repose sur les éléments horizontaux 25 à la partie supérieure de la structure et comporte des ouvertures 28 pour le passage des parties supérieures des enceintes étanches 17. Les ouvertures 28 permettent un passage des enceintes 17 avec un certain jeu si bien que les enceintes peuvent se déplacer librement sous l'effet d'une dilatation thermique et des déformations du couvercle de cuve. En effet, la cuve du réacteur et les enceintes étanches, renferment de l'eau sous haute pression et à haute température si bien que des déformations sont possibles pendant le fonctionnement du réacteur.

Une pièce d'adaptation 30 assure la liaison entre la plaque 27 et l'enceinte étanche 17 et permet d'amortir les chocs entre la plaque 27 et l'enceinte 17 en cas de séisme.

Les moteurs 18 sont généralement constitués par un rotor noyé disposé à l'intérieur de l'enceinte 17 dont l'axe entraîne en rotation l'écrou du mécanisme vis-écrou par l'intermédiaire d'une pièce d'entraînement et par un stator disposé à l'extérieur de l'enceinte étanche. Le moteur 18 et la partie correspondante de l'enceinte sont placés à l'intérieur d'une cheminée 32 qui permet par tirage naturel, une ventilation du moteur 18.

L'ensemble des cheminées telles que 32 associées à chacun des mécanismes disposés dans une enceinte étanche constitue une structure d'ensemble 33 démontable fixée grâce à un support 34 sur la partie supérieure de la structure verticale 23.

L'ensemble 33 constitué par des cheminées 32 est disposé un peu au-dessus de la plaque horizontale 27 assurant le maintien de la partie supérieure des enceintes étanches 17 en cas de séisme.

Une enceinte 36 en matériau isolant permet l'isolation thermique du couvercle de la cuve et de la partie des enceintes étanches 17 disposées en dessous du moteur 18, par rapport au milieu extérieur.

Cette enveloppe calorifuge 36 de grande dimension renferme donc l'ensemble des enceintes étanches 17 traversant le couvercle 16 de la cuve. L'enveloppe 36 est fermée à sa partie supérieure par une plaque horizontale isolante 37 posée sur la plaque résistante 27 et comportant des ouvertures correspondant à chacune des enceintes étanches renfermant un mécanisme.

Des tirants verticaux 40 permettent le levage du couvercle de la cuve grâce à un dispositif de levage tel que le dispositif 10 représenté à la figure 1.

On voit que la structure résistante verticale 23 et la plaque 27 permettent de constituer un dispositif de protection anti-sismique de l'ensemble de commande du réacteur, sans utilisation de tirants fixés sur les parois de la piscine du réacteur.

En outre, la position du moteur au-dessus de la plaque anti-sismique et l'accès libre à la partie supérieure de l'enceinte étanche permettent de procéder aux opérations de maintenance du moteur et du mécanisme situé dans l'enceinte étanche, sans avoir à démonter au préalable la plaque anti-sismique, ce qui est très avantageux puisque ces travaux sont réalisés en présence de rayonnements ionisants.

Par contre, il pourra être nécessaire de prévoir une dalle de protection anti-missile en béton armé posée au-dessus de la piscine du réacteur pour la protection de celui-ci.

D'autre part, l'utilisation de cheminées 32 pour la ventilation des moteurs 18 permet d'éviter l'utilisation d'une ventilation forcée comme dans les dispositifs de l'art antérieur.

Avec des cheminées d'une hauteur de 2 m, on a pu obtenir un tirage permettant d'atteindre un coefficient d'échange entre l'air et le métal de l'ordre de 10 watts par m$^2$ et par degré C. Ceci combiné avec l'utilisation d'un ensemble vis-écrou qui présente un rapport de réduction important et, qui en conséquence, permet de limiter la puissance motrice nécessaire pour réaliser le déplacement de la grappe, conduit à une température d'équilibre dans les bobinages du moteur qui est inférieure à 300 °C.

Lors des manutentions du couvercle de cuve, il est possible de limiter la hauteur de l'ensemble dont il faut effectuer le levage en démontant l'ensemble 33 ménageant les cheminées de ventilation 32 des moteurs. Cet ensemble monobloc et léger peut être facilement séparé du reste de l'ensemble des commandes.

On voit que les principaux avantages du dispositif suivant l'invention sont de réduire la hauteur au-dessus du couvercle de la cuve, de l'ensemble de commande, de permettre d'éviter l'utilisation de tirants anti-sismiques fixés sur les parois du réacteur, de permettre d'accéder facilement au moteur et au mécanisme situé dans l'enceinte étanche, de permettre un refroidissement naturel des moteurs dans des cheminées d'aération, de prévoir une isolation thermique efficace des enceintes étanches renfermant les mécanismes et de permettre des manutentions du couvercle de la cuve plus rapides et plus faciles.

Mais l'invention ne se limite pas au mode de réalisation qui vient d'être décrit, elle en comporte tout au contraire toutes les variantes.

C'est ainsi qu'il est possible de réaliser la structure résistante solidaire du couvercle de la cuve sous une forme différente d'une structure en charpente comme dans l'exemple qui a été décrit et on peut par exemple réaliser cette structure sous la forme d'une virole résistante, ou encore si l'on veut conserver une charpente ajouter des renforts transversaux passant entre les enceintes étanches si la hauteur des enceintes étanches ne peut être réduite par utilisation d'un dispositif à vis-écrou situé sous le couvercle de la cuve.

On peut également réaliser les cheminées d'aération des moteurs sous une forme différente de l'ensemble monobloc qui a été décrit qui a cependant l'avantage de permettre un démontage d'ensemble des cheminées correspondant à l'ensemble des mécanismes.

On peut également réaliser un calorifugeage des enceintes étanches en utilisant non pas une enveloppe en matériau isolant unique pour l'ensemble des enceintes, mais en isolant séparément chacune de ces enceintes par du matériau isolant thermique.

Enfin, l'ensemble de commande suivant l'invention peut être utilisé non seulement dans le cas d'un réacteur nucléaire à eau sous pression avec une commande déplaçant des grappes absorbantes à l'aide d'un mécanisme à vis-écrou mais également dans le cas de tout autre réacteur nucléaire où la commande est effectuée par déplacement vertical de grappes de matériau absorbant dans le cœur du réacteur et/ou les mécanismes de déplacement des grappes de matériau absorbant sont disposés dans des enceintes étanches en communication avec l'intérieur de la cuve du réacteur.

**Revendications**

1. Ensemble de commande d'un réacteur nucléaire comportant une pluralité d'enceintes étanches (17), en communication avec l'intérieur de la cuve du réacteur (15), prolongeant cette cuve, au-dessus de son couvercle (16) dans la direction verticale et renfermant chacune un mécanisme de déplacement d'une grappe de matériau absorbant les neutrons dans le cœur du réacteur, entraîné par un dispositif moteur (18), caractérisé par le fait que les dispositifs moteurs (18) sont placés dans la partie supérieure des enceintes étanches (17), à l'intérieur de cheminées d'aération verticales (32) et que l'ensemble de commande comporte également un dispositif de support et d'isolation des enceintes étanches constitué par une structure résistante (23) verticale solidaire du couvercle (16) de la cuve (15) occupant toute la hauteur des enceintes étanches (17) jusqu'à un niveau inférieur au niveau des dispositifs moteurs (18), une plaque horizontale (25) fixée à la partie supérieure de la structure verticale (23) présentant des ouvertures (28) pour le passage des enceintes étanches (17) ainsi qu'une enveloppe (36) et une plaque horizontale (37) isolant thermiquement les enceintes étanches (17) du milieu extérieur, jusqu'à un niveau inférieur au niveau des dispositifs moteurs (18).

2. Ensemble de commande suivant la revendication 1, caractérisé par le fait que la structure verticale (23) solidaire du couvercle (16) est constituée par une charpente comportant des éléments verticaux (24), des éléments horizontaux (25) à sa partie inférieure et à sa partie supérieure et des éléments de renforcement (26).

3. Ensemble de commande suivant la revendication 2, caractérisé par le fait que la plaque résistante (27) percée d'ouvertures (28) pour le passage des enceintes étanches (17) repose sur les éléments horizontaux (25) de la charpente disposés à la partie supérieure de celle-ci.

4. Ensemble de commande suivant l'une quelconque des revendications 1, 2 et 3, caractérisé par le fait que les cheminées d'aération (32) des dispositifs moteurs (18) constituent un ensemble monobloc (33) fixé sur la structure résistante verticale (23) et séparable de celle-ci.

5. Ensemble de commande suivant l'une quelconque des revendications 1 à 3, caractérisé par le fait que les mécanismes de déplacement des grappes de matériau absorbant les neutrons, sont constitués par des mécanismes à vis et écrou disposés partiellement à un niveau inférieur au niveau du couvercle (16) de la cuve (15), et à l'intérieur de celle-ci.

**Claims**

1. Control assembly for a nuclear reactor, comprising a plurality of leak-proof enclosures (17) communicating with the interior of the vessel of the reactor (15) and extending this vessel above its cover (16) in a vertical direction, each containing a mechanism for displacing a cluster of material absorbing the neutrons in the core of the reactor, this mechanism being driven by a motor device (18), characterised in that the motor devices (18), are located in the upper part of the leakproof enclosures (17) within vertical ventilation shafts (32), and in that the control assembly also comprises a device for supporting and insulating the leak-proof enclosures, which consists of a vertical resistant structure (23) fixed to the cover (16) of the vessel (15) and occupying the entire height of the leak-proof enclosures (17) up to a level below the level of the motor devices (18), a horizontal plate (27) fixed to the upper part of the vertical structure (23) having orifices (28) for passage of the leak-proof enclosures (17), and a casing (36) and a horizontal plate (37) thermally insulating the leak-proof enclosures (17) from the outside environment up to a level below the level of the motor devices (18).

2. Control assembly according to Claim 1, characterised in that the vertical structure (23) fixed to the cover (16) consists of a framework comprising vertical elements (24), horizontal elements (25) in its lower part and in its upper part and reinforcing elements (26).

3. Control assembly according to Claim 2, characterised in that the resistant plate (27) perforated with orifices (28) for passage of the leak-proof enclosures (17) rests on the horizontal elements (25) of the framework which are located in the upper part of the latter.

4. Control assembly according to any one of Claims 1, 2 and 3, characterised in that the ventilation shafts (32) of the motor devices (18) constitute a one-piece unit (33) which is fixed to the vertical resistant structure (23) and which can be separated from the latter.

5. Control assembly according to any one of Claims 1 to 3, characterised in that the mechanisms for displacing the clusters of material absorbing the neutrons consist of screw-and-nut mechanisms which are arranged partially at a level below the level of the cover (16) of the vessel (15) and within the latter.

**Ansprüche**

1. Kernreaktorsteuereinrichtung mit mehreren dichten Umhüllungen (17), die mit dem Behälterinnenraum des Reaktors (15) in Verbindung stehen und diesen Behälter über dessen Deckel (16) in senkrechter Richtung verlängern, und in welchen zum Verschieben eines Neutronenabsorbermaterialbündels jeweils ein über eine Motoranordnung (18) angetriebenes Getriebe untergebracht ist, dadurch gekennzeichnet, daß die Motorenanordnungen (18) im Inneren von senkrechten Entlüftungsschächten (32) im oberen Teil der dichten Umhüllungen (17) angeordnet sind, und daß die Steuereinrichtung auch eine Vorrichtung zur Abstützung und Isolierung der dichten Umhüllungen aufweist, die aus einer robusten, mit dem Deckel (16) des Behälters (15) fest verbundenen senkrechten Tragkonstruktion (23) besteht, die sich über die gesamte Höhe der dichten Umhüllungen (17) bis unterhalb des Niveaus der Motorenanordnungen (18) erstreckt, wobei eine an dem Oberteil der senkrechten Tragkonstruktion (23) befestigte horizontale Platte (27) Öffnungen (28) für den Durchtritt der dichten Umhüllungen (17) aufweist sowie einen Mantel (36) und eine horizontale Platte (37), welche die dichten Umhüllungen (17) bis zu einer Höhe unterhalb der Motorenanordnungen (18) von der Aussenumgebung thermisch isolieren.

2. Steuereinrichtung nach Anspruch 1, dadurch gekennzeichnet, daß die mit dem Deckel (16) fest verbundene senkrechte Tragkonstruktion (23) ein Tragwerk ist der senkrechten Bauteilen (24), horizontalen Bauteilen (25) an dessen Unter- und Oberteil und Verstärkungsbauteilen (26) aufweist.

3. Steuereinrichtung nach Anspruch 2, dadurch gekennzeichnet, daß die für den Durchtritt der dichten Umhüllungen (17) mit Öffnungen (28) versehene robuste Platte (27) auf den an dem Oberteil der Tragkonstruktion angeordneten horizontalen Bauteilen (25) der selben aufliegt.

4. Steuereinrichtung nach einem der Ansprüche 1, 2 und 3, dadurch gekennzeichnet, daß die Entlüftungsschächte (32) der Motorenanordnungen (18) eine einteilige Einheit (33) bilden, die an der senkrechten robusten Tragkonstruktion (23) befestigt ist und von dieser getrennt werden kann.

5. Steuereinrichtung nach einem der Ansprüche 1 bis 3, dadurch gekennzeichnet, daß die Getriebe zum Verfahren der Neutronenabsorbermaterialbündel Schraubenmuttergetriebe sind, die teilweise in einer Höhe unterhalb der Höhe des Deckels (16) von dem Behälter (15) und im Inneren des selben angeordnet sind.

Fig 1

Fig 2